## Europäisches Patentamt
## European Patent Office
## Office européen des brevets

(19)

(11) Numéro de publication: **0 102 339**
**A2**

(12)
# DEMANDE DE BREVET EUROPEEN

(21) Numéro de dépôt: **83870062.3**

(51) Int. Cl.³: **B 60 R 25/00**

(22) Date de dépôt: **17.06.83**

(30) Priorité: **27.08.82 BE 894225**
**09.02.83 BE 895863**

(43) Date de publication de la demande:
**07.03.84 Bulletin 84/10**

(84) Etats contractants désignés:
**AT BE CH DE FR GB IT LI LU NL SE**

(71) Demandeur: **Quivy, Michel**
**rue du Crampon 14**
**B-7500 Tournai(BE)**

(72) Inventeur: **Quivy, Michel**
**rue du Crampon 14**
**B-7500 Tournai(BE)**

(74) Mandataire: **Vigneron, Jean**
**Cabinet VIGNERON 30 avenue Eugène Godaux**
**B-1150 Bruxelles(BE)**

(54) **Dispositif anti-vol.**

(57) Dispositif antivol (1) pour véhicule automobile comprenant des moyens (2) associés au véhicule (3) et agencés pour occuper deux positions, une position inactive où ils sont situés à l'écart du sol quand le véhicule va être mis normalement en mouvement et quand il est en mouvement et une position active dans laquelle il prend appui sur le sol et provoque le soulèvement du véhicule pour que le pneumatique d'au moins une des roues motrices (5) n'ait plus une adhérence au sol suffisante pour que le véhicule puisse se déplacer sous l'action de son moteur, des moyens verrouillables étant prévus pour déplacer les moyens (2) de leur position inactive à leur position active et vice versa ainsi que pour les maintenir dans la position choisie.

FIG. 5

EP 0 102 339 A2

Croydon Printing Company Ltd

## DISPOSITIF ANTIVOL

La présente invention a pour objet un dispositif antivol pour engin roulant et en particulier un dispositif antivol pour véhicule automobile.

On connaît divers systèmes antivol, prévus pour des véhicules automobiles, qui se subdivisent en deux catégories principales ; les dispositifs à clef permettant soit la mise hors circuit des moyens électriques permettant le démarrage du moteur du véhicule, soit le blocage de la direction de ce dernier ou encore une combinaison mise hors circuit desdits moyens et blocage de direction et des dispositifs d'alarme sonore qui se déclenchent lorsque l'on touche à certains organes du véhicule ou lorsque l'on s'introduit dans ce dernier.

Ces dispositifs connus présentent chacun des inconvénients. En effet, on sait, qu'il est aisé soit de déconnecter les fils aboutissant à l'interrupteur à clef permettant la mise hors circuit des moyens électriques susdits et d'établir un contact entre les fils qui permettent le démarrage du moteur et assurent son fonctionnement, soit de rendre cet interrupteur à clef inopérant en effectuant un branchement sur l'installation électrique du véhicule tel qu'il permette la mise en marche du moteur. On sait aussi qu'il suffit d'exercer un effort violent sur le volant d'un véhicule pour mettre hors d'état des dispositifs à clef assurant le blocage de la direction.

En ce qui concerne les dispositifs d'alarme

0102339

2

sonore, si ceux-ci peuvent dissuader les voleurs, ils ne peuvent s'opposer à la mise en marche et au déplacement du véhicule jusqu'à un endroit isolé ou ledit dispositif d'alarme serait déconnecté. De plus, ces dispositifs présentent l'inconvénient de provoquer de fausses alarmes dues à des vibrations ou à de légers chocs.

Pour interdire le déplacement d'un véhicule, on connaît également une pince appelée "sabot de Denver" ou "sabot" et utilisé notamment par la police française pour bloquer une roue d'un véhicule en stationnement illicite. Cette pince ne peut pas être utilement employée comme dispositif antivol du fait que la mise en marche du véhicule par son propriétaire distrait ou par un voleur ignorant la présence de la pince pourrait occasionner des dégâts importants au véhicule.

L'invention a pour but de remédier à ces inconvénients et de procurer un dispositif antivol empêchant de manière fiable le déplacement d'un véhicule sans causer de dommage à ce dernier, même en cas de fausse manoeuvre du dispositif par un conducteur autorisé du véhicule.

A cet effet, suivant l'invention, le dispositif antivol comprend des moyens associés au véhicule et agencés pour occuper au moins deux positions, une position inactive dans laquelle ils sont situés à l'écart du sol lorsque le véhicule va normalement être mis en mouvement ainsi que lorsqu'il est en mouvement et une position active dans laquelle il prend appui sur le sol et provoque le soulèvement du véhicule de manière à ce que le pneumatique d'au moins une des roues motrices n'ait plus une adhérence au sol suffisante pour que ledit véhicule puisse se déplacer sous l'action de son moteur, des moyens verrouillables inviolables étant prévus pour déplacer les moyens précités de leur position inactive à leur position active et vice versa ainsi que pour les maintenir dans la position choisie.

Suivant une forme de réalisation de l'invention, les moyens associés au véhicule et prévus pour occuper les deux positions susdites sont agencés pour occuper une troisième position intermédiaire dans laquelle ils posent sur le sol lorsque le véhicule est en stationnement et que l'on désire le protéger contre le vol, ces moyens étant en outre agencés pour qu'ils passent automatiquement de cette position intermédiaire à la position active susdite lors d'un déplacement frauduleux du véhicule.

Suivant un mode de réalisation avantageux de l'invention, les moyens associés au véhicule et agencés pour occuper les positions susdites comprennent au moins une béquille s'étendant sensiblement parallèlement au plan vertical passant par l'axe longitudinal du véhicule, une des extrémités de cette béquille étant calée sur un arbre pouvant tourner autour d'un axe, fixe par rapport au véhicule, sensiblement horizontal et perpendiculaire audit plan vertical, l'autre extrémité de la béquille étant libre et dirigée vers l'avant du véhicule, la distance séparant l'axe de l'arbre susdit de l'extrémité libre de la béquille étant supérieure à la distance séparant cet axe du sol lorsque le véhicule occupe une position telle qu'au moins une de ses roues motrices soit n'offre pratiquement plus d'adhérence avec le sol, soit n'est plus en contact avec le sol, l'arbre sur lequel est monté la béquille étant supporté, de manière à pouvoir tourner autour de son axe, dans un boîtier fixé au châssis ou au plancher du véhicule, les moyens verrouillables précités prévus pour déplacer la béquille, entre sa position inactive

4

dans laquelle elle est sensiblement parallèle, au sol et sa position intermédiaire dans laquelle elle pose obliquement sur le sol et vice versa, étant agencés dans ce boîtier.

Suivant une forme de réalisation particulièrement avantageuse de l'invention, les moyens susdits prévus pour déplacer la béquille comprennent une vis sans fin supportée dans le boîtier précité pour que son axe soit situé dans un plan perpendiculaire à l'axe de l'arbre sur lequel est montée la béquille, des moyens, tels que moteur électrique agencés pour faire tourner la vis sans fin, autour de son axe, dans un sens et dans l'autre, un élément taraudé agencé sur la vis sans fin de manière à ce qu'il puisse se déplacer suivant l'axe de cette dernière lorsque celle-ci est entraînée en rotation, des moyens coopérant avec l'élément taraudé pour interdire sa rotation autour de l'axe de la vis sans fin et une bielle reliant la béquille à l'élément taraudé et agencé de manière à ce que, d'une part, le déplacement de l'élément taraudé sur la vis sans fin provoque le pivotement de la béquille autour de l'axe de l'arbre sur lequel elle est montée et d'autre part, que le déplacement de la béquille de sa position intermédiaire à sa position active précitée, dans laquelle elle provoque le soulèvement du véhicule, puisse s'effectuer sans que la bielle exerce une poussée sur l'élément taraudé.

D'autres détails et particularités de l'invention, ressortiront de la description des dessins annexés au présent mémoire et qui représentent, à titre d'exemples non limitatifs, des formes de réalisation particulières du dispositif antivol suivant l'invention.

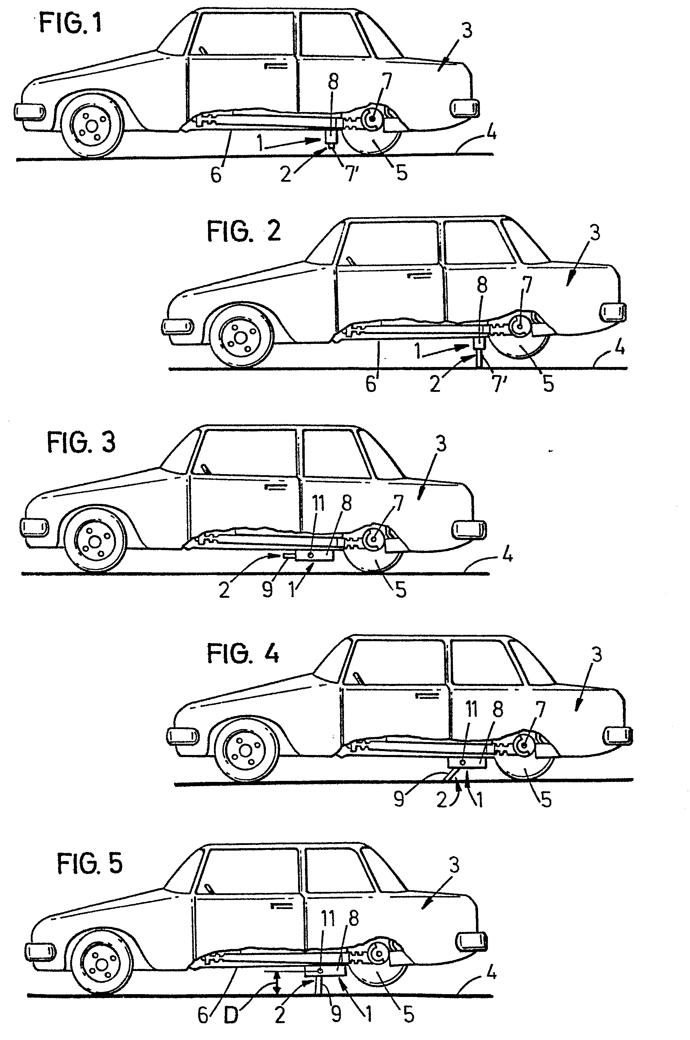

Les figures 1 et 2 sont des vues en élévation

5

schématiques montrant un véhicule automobile équipé du dispositif antivol suivant l'invention, la figure 1 montrant le dispositif en position inactive, tandis que la figure 2 montre le dispositif en position active dans laquelle une des roues motrices du véhicule n'a plus d'adhérence au sol.

Les figures 3 à 5 sont des vues en élévation schématiques montrant un véhicule automobile équipé d'une variante du dispositif illustré aux figures 1 et 2, la figure 3 montrant le dispositif en position inactive, la figure 4 montrant le dispositif occupant sa position intermédiaire susdite dans laquelle les moyens précités posent sur le sol, tandis que la figure 5 montre le dispositif en position active dans laquelle il soulève le véhicule lors de sa mise en marche frauduleuse.

La figure 6 est une vue en élévation et en coupe montrant, à plus grande échelle, le dispositif antivol illustré aux figures 3 à 5.

La figure 7 est une vue en plan correspondant à la figure 6. La figure 8 est une vue en coupe suivant la ligne VIII-VIII de la figure 7.

La figure 9 est une vue correspondante à la figure 7 et montrant une variante du dispositif antivol illustré à cette figure 7.

La figure 10 est une vue en coupe suivant la ligne X-X de la figure 9.

La figure 11 est une vue analogue à la figure 6 et montrant une variante des dispositifs antivols illustrés aux figures 6 à 10.

La figure 12 est une vue analogue à la figure 11 et montrant une variante du dispositif antivol illustré à cette figure 11.

La figure 13 est une vue en plan correspondant à la figure 12.

Dans les différentes figures, les mêmes notations de référence désignent des éléments identiques ou analogues.

Le dispositif antivol 1 pour véhicule suivant l'invention et illustré aux figures 1 et 2, comprend des moyens 2 associés au véhicule 3 et agencés pour occuper deux positions, une position inactive (figure 1) dans laquelle ils sont situés à l'écart du sol 4 lorsque ledit dispositif n'est pas enclenché c'est-à-dire pour une mise en mouvement normale du véhicule et pendant le mouvement de ce dernier, et une position active (figure 2), lorsque le véhicule est à l'arrêt et que l'on souhaite le protéger contre le vol, dans laquelle ils provoquent le soulèvement dudit véhicule afin qu'au moins une des roues motrices 5 de celui-ci n'ait plus une adhérence au sol suffisante pour que le véhicule puisse être déplacé grâce à son moteur, ou ne soit plus en contact avec le sol, des moyens verrouillables non représentés étant prévus pour déplacer les moyens 2 de leur position inactive à leur position active et vice versa ainsi que pour les maintenir dans la position choisie. Ces moyens 2 sont fixés sous le véhicule, au plancher ou au châssis 6 de ce dernier, à proximité de l'essieu moteur 7. Les moyens 2 sont constitués par une tige 7' sensiblement perpendiculaire au sol et guidée dans un boitier 8, fixé au plancher 6 du véhicule, pour se déplacer suivant son axe longitudinal pour occuper l'une des deux positions précitées. Cette tige 7' est commandée par les moyens verrouillables susdits non représentés, tels que vérin à fluide sous pression, moteur électrique entraînant un pignon engrenant avec une denture réalisée sur la tige. Dans la forme de réalisation du dispositif antivol illustrée aux figures 3 à 10, les moyens 2 sont agencés pour occuper une troisième position intermédiaire (voir figure 4) dans laquelle ils posent sur le sol lorsque le véhicule est en stationnement et que l'on désire le protéger contre le vol. Dans cette position intermédiaire, le véhicule est en position normale; les moyens 2 sont en outre agencés pour passer automatiquement, lors d'un déplacement frauduleux du véhicule, de cette position intermédiaire à la position active (figure 5) dans laquelle le véhicule est soulevé, pour que le pneumatique d'au moins une de ses roues motrices perde son adhérence au sol.

Dans cette forme de réalisation, les moyens 2 comprennent une béquille 9 qui s'étend sensiblement parallèlement au plan vertical passant par l'axe longitudinal du véhicule. L'extrémité 10 de cette béquille est calée sur un arbre 11 pouvant tourner autour d'un axe, de trace 12 et fixe par rapport au véhicule, qui est sensiblement horizontal et perpendiculaire au plan vertical passant par l'axe longitudinal du véhicule. L'extrémité 13 de la béquille, garnie d'un patin 14, est libre et dirigée vers l'avant du véhicule. La distance qui sépare l'axe 12 de l'arbre 11 est supérieure à la distance qui sépare cet axe du sol 4 lorsque le véhicule occupe une position telle que le pneumatique d'au moins une de ses roues motrices 5 soit n'offre pratiquement plus d'adhérence avec le sol, soit n'est plus en contact avec ce dernier (distance D - figure 5). L'arbre 11 est supporté, de manière à pouvoir tourner autour de son axe 12, dans un boîtier 8 fixé au plancher 6 du véhicule, ce boîtier renfermant les moyens 5' précités prévus pour déplacer la béquille 9 entre sa position inactive dans laquelle elle est sensiblement parallèle au sol et sa position intermédiaire

8

dans laquelle elle repose obliquement sur le sol et vice versa.

Ces moyens 5' comprennent une vis sans fin 15 supportée dans le boîtier 8 pour que son axe soit situé dans un plan perpendiculaire à l'axe 12 de l'arbre 11, des moyens, tels que moteur électrique 16, agencés pour faire tourner la vis sans fin dans un sens ou dans l'autre autour de son axe, un élément taraudé 17 agencé sur la vis sans fin 15 pour qu'il puisse se déplacer suivant l'axe de cette vis lorsqu'elle est entraînée en rotation, des moyens 18 coopérant avec l'élément 17 pour interdire sa rotation autour de l'axe de la vis 15 et une bielle 19 reliant la béquille 9 audit élément 17, cette bielle étant agencée de manière à ce que, d'une part, le déplacement de l'élément 17 sur la vis 15 provoque le pivotement de la béquille 9 autour de l'axe 12, et, d'autre part, que le déplacement automatique de la béquille de sa position intermédiaire à sa position active susdite, dans laquelle elle provoque le soulèvement du véhicule, puisse s'effectuer sans que la bielle 19 exerce une poussée sur l'élément taraudé 17, de sorte que le mouvement de la bielle 19, lorsque la béquille passe de sa position intermédiaire à sa position active, ne puisse, via l'élément 17, exercer sur la vis sans fin 15 un effort qui pourrait provoquer la flexion de cette dernière.

Cette bielle 19 est calée, à une de ses extrémités, sur l'arbre 11 et présente, à son extrémité 20, une boutonnière 21 dans laquelle est engagé un tourillon 22 parallèle à l'arbre 11 et porté par l'élément taraudé 17. Cette boutonnière 21 est profilée de telle manière que le tourillon 22 est libre par rapport à la bielle 19 lorsque la béquille passe de sa position intermédiaire à la position active provoquant le soulève-

9

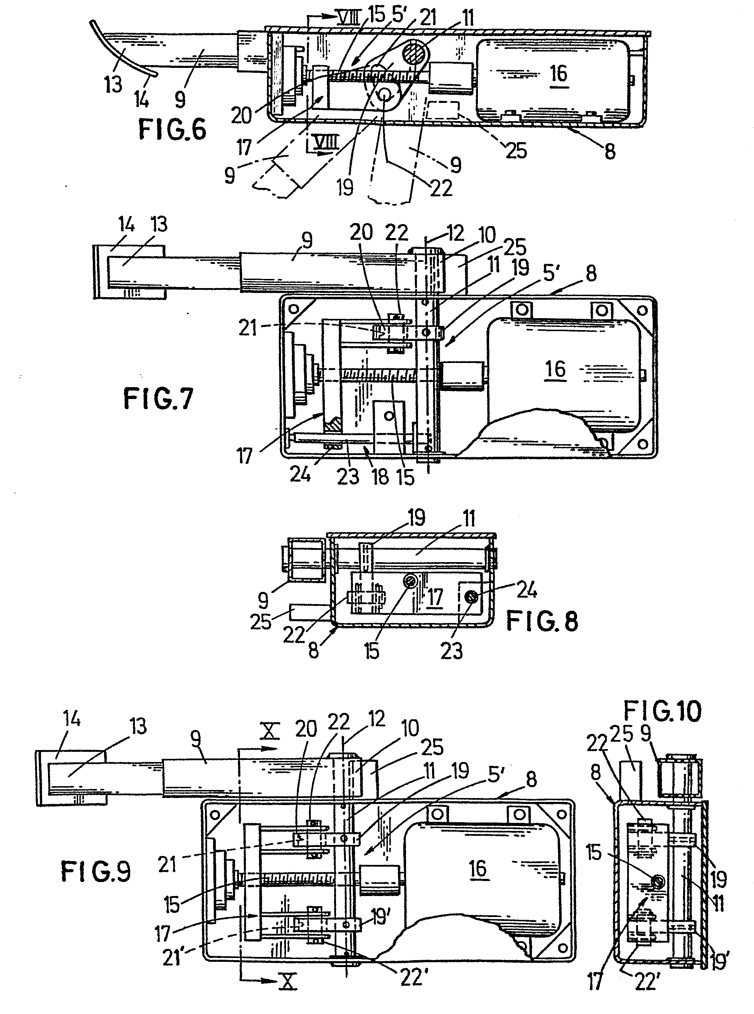

ment du véhicule, ce qui permet d'éviter tout effort sur l'élément 17 et sur la vis sans fin 15, cette boutonnière 21 étant également profilée pour que le tourillon 22 agisse sur la bielle 19 lorsque la vis 15 est entraînée en rotation, dans un sens ou dans l'autre, pour amener la béquille 9 de sa position intermédiaire à sa position inactive et vice versa. Les moyens 18 susdits interdisant la rotation de l'élément 17 autour de la vis 15 peuvent être constitués, comme montré aux figures 7 et 8, par une tige fixe 23 supportée dans le boîtier 8, parallèlement à cette vis 15, et coopérant avec une ouverture 24, de section légèrement supérieure à celle de la tige 23, pratiquée dans l'élément taraudé 17. Ces moyens 18 pourraient également, comme montré aux figures 9 et 10, être constitués par une seconde bielle 19' identique à la bielle 19 et calée, à une de ses extrémités, sur l'arbre 11, cette bielle 19' présentant, à son autre extrémité, une boutonnière 21' dans laquelle est engagé un tourillon 22' porté par l'élément taraudé 17 et dont l'axe est confondu avec l'axe du tourillon 22, lesdites bielles 19 et 19' étant disposées symétriquement par rapport à l'axe de la vis sans fin 15.

Suivant l'invention, l'inertie des moyens 5' est telle que la béquille 9 ne peut passer de sa position inactive à sa position intermédiaire sous l'action de son propre poids ni sous l'action de ce poids combiné aux vibrations et aux chocs transmis à ces divers éléments lorsque le véhicule est en mouvement.

Pour éviter une détérioration du dispositif lors d'une tentative de déplacement frauduleux du véhicule, le boîtier 8 comprend une butée fixe 25 disposée sur la trajectoire de la béquille 9. Cette butée 25 est agencée pour immobiliser ladite béquille, lorsque celle-ci passe de sa position intermédiaire à sa position active, dans laquelle le véhicule est soulevé soit avant qu'elle atteigne une position verticale, soit lorsqu'elle atteint cette position verticale.

Le moteur électrique 16 est commandé par un interrupteur à clef, non représenté, disposé à l'intérieur du véhicule. Cet interrupteur sera avantageusement du type à rappel automatique de la clef en position neutre, seule position autorisant le dégagement et l'entrée de la clef, tandis que les fils raccordant l'interrupteur au moteur 16 seront avantageusement placés sous gaine métallique. Lorsque le moteur 16 est alimenté, son alimentation est automatiquement coupée par des interrupteurs thermiques s'ouvrant lors de la surcharge mécanique du moteur lorsque la béquille 9 a atteint sa position inactive ou sa position intermédiaire. Pour rendre inopérante toute fausse manoeuvre du dispositif antivol lorsque le véhicule est en mouvement, un relais inverseur est intercalé dans le circuit électrique du moteur 16 de telle sorte que ce relais soit ouvert et maintenu ouvert lorsque l'interrupteur de contact du véhicule est fermé, un témoin lumineux étant avantageusement prévu, dans le circuit précité, pour être mis sous tension lorsque la béquille 9 occupe sa position intermédiaire.

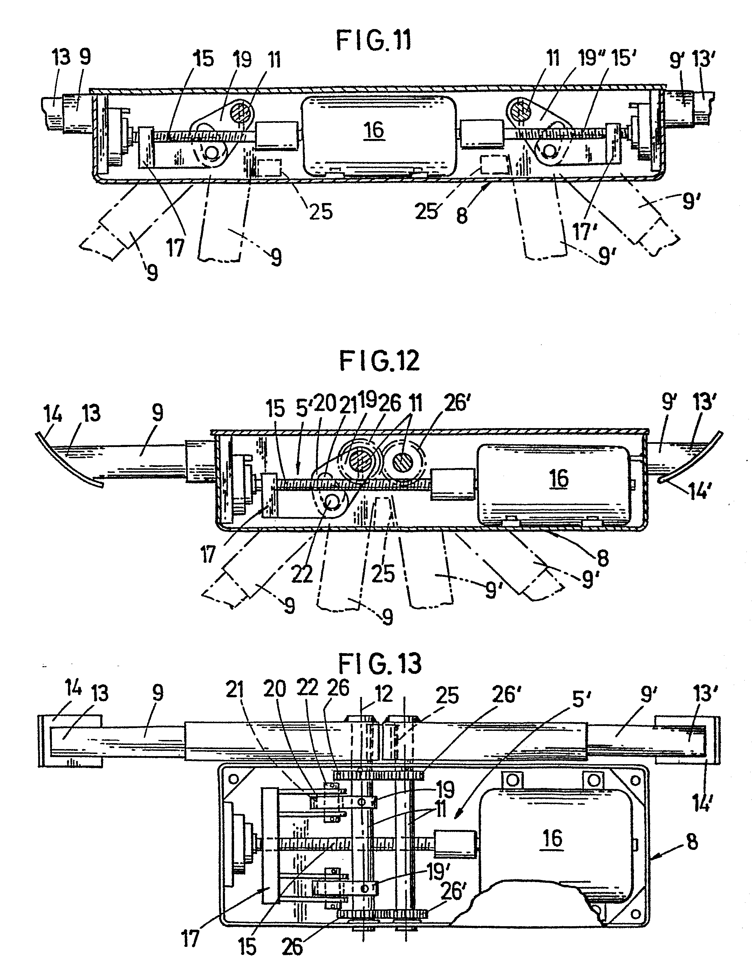

Le dispositif antivol illustré aux figures 3 à 10 est destiné à rendre impossible le déplacement frauduleux d'un véhicule en marche avant. Si l'on souhaitait empêcher également le déplacement du véhicule en marche arrière, on pourrait utiliser, suivant l'invention, un dispositif antivol comportant, comme montré aux figures 11 à 13, deux béquilles 9 et 9', l'extrémité libre 13 de la béquille 9 étant dirigée vers l'avant du véhicule tandis que l'extrémité libre 13' de la béquille 9' est

11

dirigée vers l'arrière. Les béquilles 9 et 9' sont calées chacune sur un arbre 11, ces arbres 11 étant parallèles. Dans la forme de réalisation montrée à la figure 11, les arbres 11 sont disposés de part et d'autre du moteur électrique 16 qui commande simultanément les deux béquilles pour que celles-ci occupent simultanément soit leur position active, soit leur position inactive. Cette commande s'effectue par l'intermédiaire de deux vis sans fin 15 et 15' alignées, disposées de part et d'autre du moteur 16 et entraînées simultanément par ce dernier, et dont les pas sont inversés, et de deux éléments taraudés 17 et 17" coopérant chacun avec au moins une bielle 19 et 19".

Dans la forme de réalisation illustrée aux figures 12 et 13, les arbres 11 sont disposés du même côté du moteur 16, ce qui permet de réduire l'encombrement du dispositif par rapport à celui montré à la figure 11 ainsi que de simplifier sa construction. L'un de ces arbres 11 est commandé par le moteur 16, la vis sans fin 15, la pièce taraudée 17 et les bielles 19 et 19'. Cet arbre 11 porte au moins une roue dentée 26, calée sur ledit arbre, qui engrène avec une roue dentée correspondante 26' calée sur l'autre arbre 11. Les diamètres des roues dentées 26 et 26' sont égaux pour que les mouvements des béquilles 9 et 9', calées sur ces arbres 11, s'effectuent simultanément en sens inverse et pour que les amplitudes de ces mouvements soient identiques. Les dispositifs illustrés aux figures 10 à 13 présentent, sur leur boîtier 8, une ou deux butées fixes 25 pour limiter le déplacement des béquilles comme exposé ci-dessus.

Au cas où le boitier 8 du dispositif antivol serait fixé au plancher du véhicule à l'aide de vis ou de boulons, on prévoit, suivant l'invention, de rendre inaccessible ces vis et boulons de l'extérieur du boîtier quant la ou les béquilles du dispositif occupent leur position active. A cet effet, le boîtier présente des ouvertures, à travers lesquelles sa fixation peut être réalisée, qui sont disposées en regard des emplacements des vis et un écran, situé dans le boîtier et fixé à l'élément taraudé 17, qui est agencé pour obturer lesdites ouvertures quand l'élément 17 occupe sa position correspondant à la position active de la béquille dont il commande le mouvement.

Pour les véhicules à deux essieux moteurs, il conviendra soit de disposer le dispositif antivol de manière à ce qu'il puisse soulever le véhicule pour qu'une roue de chacun des ponts moteurs perde son adhérence, soit de prévoir un dispositif disposé à proximité de chacun de ces ponts moteurs.

Il doit être entendu que l'invention n'est nullement limitée aux formes de réalisation décrites et que bien des modifications peuvent être apportées à ces dernières sans sortir du cadre du présent brevet.

C'est ainsi que l'on pourrait notamment prévoir un dispositif dont la béquille est de longueur réglable, de manière à permettre d'adapter ce dispositif à des types de véhicule différents.

REVENDICATIONS

1) Dispositif antivol (1) pour engin roulant, en particulier pour véhicule automobile, caractérisé en ce qu'il comprend des moyens (2) associés au véhicule (3) et agencés pour occuper au moins deux positions, une position inactive dans laquelle ils sont situés à l'écart du sol (4) lorsque le véhicule va normalement être mis en mouvement ainsi que lorsqu'il est en mouvement et une position active dans laquelle il prend appui sur le sol et provoque le soulèvement du véhicule de manière à ce que le pneumatique d'au moins une des roues motrices (5) n'ait plus une adhérence au sol suffisante pour que ledit véhicule puisse se déplacer sous l'action de son moteur, des moyens verrouillables inviolables (5') étant prévus pour déplacer les moyens (2) précités de leur position inactive à leur position active et vice versa ainsi que pour les maintenir dans la position choisie.

2) Dispositif antivol (1) suivant la revendication 1, caractérisé en ce que les moyens (2) susdits sont agencés pour occuper une troisième position intermédiaire dans laquelle ils posent sur le sol lorsque le véhicule est en stationnement et que l'on désire le protéger contre le vol, ces moyens étant en outre agencés pour qu'ils passent automatiquement de cette position intermédiaire à la position active susdite lors d'un déplacement frauduleux du véhicule.

3) Dispositif antivol suivant l'une ou l'autre des revendications 1 et 2 caractérisé en ce que les moyens précités (2) associés au véhicule et agencés pour occuper les deux positions susdites sont fixés sous le véhicule, au plancher (6) ou au châssis de ce dernier, à proximité de la roue motrice (5).

4) Dispositif antivol suivant l'une ou l'autre des revendications 2 et 3, caractérisé en ce que les moyens (2) associés au véhicule et agencés pour occuper les positions susdites comprennent au moins une béquille (9) s'étendant sensiblement parallèlement au plan vertical passant par l'axe longitudinal du véhicule, une des extrémités (10) de cette béquille étant calée sur un arbre (11) pouvant tourner autour d'un axe (12), fixe par rapport au véhicule, sensiblement horizontal et perpendiculaire audit plan vertical, l'autre extrémité (13) de la béquille étant libre et dirigée vers l'avant du véhicule, la distance séparant l'axe (12) de l'arbre susdit de l'extrémité libre de la béquille étant supérieure à la distance séparant cet axe du sol lorsque le véhicule occupe une position telle qu'au moins une de ses roues motrices n'offre pratiquement plus d'adhérence avec le sol, soit n'est plus en contact avec le sol.

5) Dispositif antivol suivant la revendication 4, caractérisé en ce que l'arbre (11) sur lequel est montée la béquille (9) est supporté, de manière à pouvoir tourner autour de son axe, dans un boîtier (8) fixé au châssis (6) ou au plancher du véhicule, les moyens verrouillables (5') précités prévus pour déplacer la béquille, entre sa position inactive dans laquelle elle est sensiblement parallèle au sol et sa position intermédiaire dans laquelle elle pose obliquement sur le sol et vice versa, étant agencés dans ce boîtier.

6) Dispositif antivol suivant la revendication 5, caractérisé en ce que le boîtier (8) comprend une butée fixe (25) disposée sur la trajectoire de la béquille (9) et agencée pour que cette dernière soit immobilisée, lorsqu'elle passe de sa position intermédiaire susdite à sa position active, soit avant d'atteindre une position verticale, soit lorsqu'elle atteint cette position verticale.

7) Dispositif antivol suivant l'une ou l'autre des revendications 5 et 6, caractérisé en ce que les moyens susdits (5') prévus pour déplacer la béquille (9) comprennent une vis sans fin (15) supportée dans le boîtier précité (8) pour que son axe soit situé dans un plan perpendiculaire à l'axe (12) de l'arbre (11) sur lequel est montée la béquille (9), des moyens, tels que moteur électrique (16) agencés pour faire tourner la vis sans fin, autour de son axe, dans un sens et dans l'autre, un élément taraudé (17) agencé sur la vis sans fin de manière à ce qu'il puisse se déplacer suivant l'axe de cette dernière lorsque celle-ci est entraînée en rotation, des moyens (18) coopérant avec l'élément taraudé (17) pour interdire sa rotation autour de l'axe de la vis sans fin et une bielle (19) reliant la béquille (9) à l'élément taraudé (17) et agencée de manière à ce que, d'une part, le déplacement de l'élément taraudé sur la vis sans fin provoque le pivotement de la béquille autour de l'axe de l'arbre sur lequel elle est montée et d'autre part, que le déplacement de la béquille de sa position intermédiaire à sa position active précitée, dans laquelle elle provoque le soulèvement du véhicule, puisse s'effectuer sans que la bielle exerce une poussée sur l'élément taraudé.

8) Dispositif antivol suivant la revendication 7, caractérisé en ce que la bielle (19) susdite est calée, à une de ses extrémités, sur l'arbre (11) sur lequel est montée la béquille et présente, à son autre extrémité, une boutonnière (21) dans laquelle est engagé un tourillon (22), porté par l'élément taraudé (17) et pa-

rallèle à l'arbre (11) susdit, cette boutonnière étant profilée de telle manière que, d'une part, le tourillon est libre par rapport à la bielle lors du mouvement de celle-ci quand la béquille passe de sa position intermédiaire dans laquelle elle pose sur le sol à sa position active dans laquelle elle provoque le soulèvement du véhicule et, d'autre part, le tourillon (22) agit sur la bielle (19) lorsque la vis sans fin est entraînée en rotation pour amener la béquille de sa position intermédiaire à sa position inactive et vice versa.

9) Disposition antivol suivant l'une ou l'autre des revendications 7 et 8, caractérisé en ce que les moyens (18) coopérant avec l'élément taraudé (17) pour interdire sa rotation autour de l'axe de la vis sans fin (15), sont constitués par une seconde bielle (19') identique à la bielle (19) et calée à une de ses extrémités, sur l'arbre (11) tandis qu'elle présente, à son autre extrémité, une boutonnière (21') dans laquelle est engagée un tourillon (22') porté par l'élément taraudé (17) et dont l'axe est confondu avec celui du tourillon (22), les bielles (19) et (19') étant disposées symétriquement par rapport à l'axe de la vis sans fin (15).

10) Dispositif antivol suivant l'une ou l'autre des revendications 7 et 8, caractérisé en ce que les moyens (18) coopérant avec l'élément taraudé (17) pour interdire sa rotation autour de l'axe de la vis sans fin (15) sont constitués par une tige fixe (23) supportée dans le boîtier (8) parallèlement à ladite vis, cette tige coopérant avec une ouverture (24) de section légèrement supérieure à celle de la tige (23), pratiquée dans l'élément taraudé (17).

11) Dispositif antivol suivant l'une quelconque des revendications 4 à 10, caractérisé en ce que l'inertie des moyens (5') prévus pour déplacer la béquille (9) est telle que celle-ci ne puisse passer de sa position inactive à sa position intermédiaire sous l'action de son propre poids, combiné aux vibrations et chocs provoqués par le roulement du véhicule.

12) Dispositif antivol suivant l'une quelconque des revendications 5 à 7, caractérisé en ce que le moteur électrique (16) susdit est commandé par un interrupteur à clef situé dans le véhicule, l'alimentation du moteur étant coupée par des interrupteurs thermiques s'ouvrant lors de surcharge mécanique du moteur (16) lorsque la béquille a atteint sa position inactive ou intermédiaire susdite, un relais inverseur étant intercalé dans le circuit électrique du moteur (16) de telle sorte que ce relais soit ouvert et maintenu ouvert lorsque l'interrupteur de contact du véhicule est fermé, un témoin lumineux étant avantageusement prévu dans le circuit précité pour être mis sous tension lorsque la béquille (9) occupe sa position intermédiaire.

13) Dispositif antivol suivant l'une quelconque des revendications 5 à 12, caractérisé en ce que le boîtier (8) est fixé au véhicule à l'aide de vis et d'écrous, ce boîtier présentant des ouvertures permettant sa fixation et disposées en regard des emplacements des vis, un écran situé dans le boîtier et fixé à l'élément taraudé (17) étant agencé pour obturer ces ouvertures lorsque la béquille (9) est en position intermédiaire et en position active et pour découvrir lesdites ouvertures lorsque la béquille est en position inactive.

14) Dispositif antivol suivant l'une quelconque des revendications 4 à 13, caractérisé en ce qu'il comprend deux béquilles (9 et 9'), l'extrémité d'une des béquilles étant dirigée vers l'avant du véhicule tandis que l'extrémité libre de l'autre béquille est dirigée vers l'arrière de ce dernier, les béquilles étant calées sur deux arbres parallèles (11) et commandées par les moyens précités (5') agencés pour les déplacer, en sens inverse, pour que lesdites béquilles occupent simultanément soit leur position intermédiaire, soit leur position inactive.

15) Dispositif antivol suivant la revendication 14, caractérisée en ce qu'un des arbres (11) est commandé par les moyens (5'), cet arbre portant au moins une roue dentée (26) calée sur ledit arbre, qui engrène avec une roue dentée (26') calée sur l'autre arbre (11), les diamètres des roues dentées étant égaux de sorte que les mouvements des béquilles 9 et 9' calées sur lesdits arbres s'effectuent en sens inverse et que les amplitudes de ces mouvements sont identiques.

0102339

FIG.1

FIG. 2

FIG. 3

FIG. 4

FIG. 5

0102339

FIG.6

FIG.7

FIG.8

FIG.10

FIG.9

0102339

FIG.11

FIG.12

FIG.13